## Europäisches Patentamt

## European Patent Office

## Office européen des brevets

(19)

(11) Veröffentlichungsnummer: **0 017 135**

**A1**

(12)

# EUROPÄISCHE PATENTANMELDUNG

(21) Anmeldenummer: **80101564.5**

(51) Int. Cl.³: **B 23 B 29/034**

(22) Anmeldetag: **25.03.80**

(30) Priorität: **28.03.79 DE 2912157**

(43) Veröffentlichungstag der Anmeldung:
**15.10.80 Patentblatt 80/21**

(84) Benannte Vertragsstaaten:
**FR GB IT SE**

(71) Anmelder: **Coromant Engineering GmbH Gesellschaft zur Projektierung von Industrieanlagen**
Dr.-Werner-Freyberg-Strasse 7
D-6941 Laudenbach(DE)

(72) Erfinder: **Wolf, Wilhelm, Dr.-Ing.**
Am Holderbusch 4
D-6941 Laudenbach(DE)

(72) Erfinder: **Horsch, Wilfried**
Pfaffenklinge 10
D-6951 Obrigheim(DE)

(72) Erfinder: **Büge, Peter**
Kohlwiese 7
D-6942 Mörlenbach 4(DE)

(74) Vertreter: **Katscher, Helmut, Dipl.-Ing.**
Bismarckstrasse 20
D-6100 Darmstadt(DE)

(54) **Einrichtung zur radialen Verstellung einer in einem Werkzeugkörper angeordneten Schneide.**

(57) Eine Drehmaschine oder eine Feinbohrmaschine weist eine radial verstellbare Werkzeugschneide auf. Ein Schrittmotor (15) treibt über einen Schneckentrieb (17, 19) eine zweiteilige, spielfrei vorgespannte Spindelmutter (20) an, die über eine Kugelumlaufspindel (21) eine Zugstange (12) axial bewegt. Die Zugstange (12) hebt über einen Verstellmechanismus die Werkzeugschneide am Ende des Bearbeitungsvorgangs ab und stellt die Werkzeugschneide vor dem folgenden Bearbeitungsvorgang radial so ein, daß der Schneidenverschleiß kompensiert wird.

EP 0 017 135 A1

./...

**Fig.1**

Einrichtung zur radialen Verstellung einer in einem
Werkzeugkörper angeordneten Schneide

Die Erfindung betrifft eine Einrichtung zur radialen Verstellung einer in einem Werkzeugkörper angeordneten Schneide zur
Kompensation des an der Schneide auftretenden Verschleißes
mittels eines im Werkzeugkörper angeordneten Verstellmechanismus, der über eine axial verschiebbare Zugstange mit einer
Gewindespindel in Eingriff steht, deren in einem Gehäuse gelagerte Spindelmutter über ein Drehzahlreduziergetriebe mit
sich kreuzenden Achsen von einem Verstellmotor antreibbar
ist.

Nach Beendigung eines Bearbeitungsvorganges, bei dem sich das
Werkzeug oder das Werkstück dreht (z.B. bei einer Feinbohrmaschine oder einer Drehmaschine), muß die Werkzeugschneide
von der bearbeiteten Werkstückoberfläche abgehoben werden,
damit sie auf dieser Fläche beim Ausfahren des Werkzeugs
keine Markierungen (Rückzugsriefen) hinterläßt. Vor Beginn
des nächsten Bearbeitungsvorgangs muß die Werkzeugschneide
wieder in ihre Ausgangsposition gebracht werden.

Da die Werkzeugschneide einem Verschleiß unterliegt, ändert sich nach einiger Zeit das Istmaß des bearbeiteten Werkstücks, so daß in gewissen Zeitabständen eine Nachstellung der Werkzeugschneide zur Kompensation des bis dahin aufgetretenen Schneidenverschleißes erforderlich ist.

Wenn diese Verstellung zur Kompensation des Schneidenverschleißes manuell mittels eines festen Anschlags oder eines Meßtasters erfolgt, muß die Maschinenspindel für diese Verstellung stillgesetzt werden. Abgesehen von dem erforderlichen Arbeitsaufwand tritt dadurch ein Zeitverlust auf. Diese Nachteile fallen um so schwerer ins Gewicht, je häufiger die Kompensation erfolgen muß.

Es ist bekannt, Bohrwerkzeuge so auszuführen, daß auch bei sich drehender Werkzeugspindel eine radiale Verstellung der Schneide vorgenommen werden kann (DE-OS 24 05 694). Die Bohrstange ist um eine quer zu ihrer Drehachse liegende Achse relativ zu der Werkzeugspindel schwenkbar gelagert. Ein in das Innere der Werkzeugspindel ragender, mit der Bohrstange verbundener Arm stützt sich an einer Schrägfläche der axial bewegbaren Zugstange ab. Durch eine axiale Verstellung der Zugstange kann eine radiale Verstellung der Werkzeugschneide vorgenommen werden.

Es ist auch bekannt (DE-OS 2 435 489), über eine durch die Zugstange axial verschiebbare Schrägfläche den die Schneide tragenden Werkzeugkörper insgesamt zu verformen, der zu diesem Zweck als Federelement ausgebildet ist.

Diese bekannten Konstruktionen der Werkzeugkörper geben die Möglichkeit, sowohl die radiale Bewegung der Schneide zum Abheben nach Beendigung eines Arbeitsvorganges als auch die radiale Schneidenbewegung zur Kompensation des Schneidenverschleißes vorzunehmen. Die Einführung derartiger Einrichtungen in die Praxis, insbesondere in den Fertigungsbetrieb, stößt jedoch auf Schwierigkeiten, weil an diese beiden radialen Schneidenbewegungen, die beim Auslösen eines Kompensationsvorgangs einander überlagern, sehr unterschiedliche Anforderungen gestellt werden.

Die radiale Schneidenbewegung zur Kompensations des Schneidenverschleißes muß mit sehr hoher Genauigkeit erfolgen, weil bei sehr engen Fertigungstoleranzen schon ein geringer Schneidenverschleiß kompensiert werden muß.

Das Abheben der Schneide für die Rückzugsbewegung des Werkzeugkörpers muß einerseits relativ zur Bearbeitungszeit sehr rasch erfolgen, damit am Ende des Bearbeitungsvorgangs keine Verweilzeit für die Abhebebewegung erforderlich ist, und andererseits – trotz eines im Vergleich zum Kompensationsvorgang um Faktor 100 größeren Verstellweges – mit derselben hohen Genauigkeit wie dieser ausgeführt werden. Dazu ist ein Verstellantrieb erforderlich, der schnell, genau und mit verhältnismäßig großer Verstellkraft arbeitet.

Die Überlagerung dieser beiden Bewegungen ergibt eine resultierende Bewegung, die einerseits sehr rasch und andererseits mit großer Positioniergenauigkeit erfolgen muß. Diese sehr unterschiedlichen Forderungen haben dazu geführt, daß man bei den meisten Ausführungsformen versucht hat, diese beiden, einander überlagernden Bewegungen durch getrennte Verstellantriebe vorzunehmen. So wurde bei einer Einrichtung der eingangs genannten Art die Axialbewegung der Zugstange zum Abheben der Schneide durch einen die Zugstange umgebenden Hydraulikzylinder mit festem Axialanschlag vorgenommen, während die überlagerte Axialbewegung der Zugstange zur Verschleißkompensation durch eine Gewindespindel und eine in einem Gehäuse gelagerte, antreibbare Spindelmutter erfolgt, wobei das Gehäuse mit dem Kolben des Hydraulikzylinders verbunden ist.

Bei einer anderen Konstruktion wird mittels der antreibbaren Spindelmutter und der Gewindespindel ein axialer Anschlag verstellt, gegen den die Zugstange bei jedem Hub des für
die Abhebbewegung vorgesehenen Hydraulikzylinders führt.
Die Lage dieses verstellbaren Axialanschlags bestimmt die
radiale Einstellung der Werkzeugschneide am Beginn jedes
Bearbeitungsvorgangs.

Diese Konstruktionen sind durch die beiden gesonderten
Verstellantriebe für die Axialbewegung der Zugstange verhältnismäßig aufwendig. Bei einer Zusammenfassung dieser
beiden Antriebe ließe sich bei den bisher bekannten Einrichtungen keine ausreichende Positioniergenauigkeit für
die radiale Einstellung der Werkzeugschneide erreichen.
Dabei ist auch noch zu berücksichtigen, daß für die Kompensationsverstellung möglichst vielfältige Eingriffs-
und Änderungsmöglichkeiten vorgesehen werden sollen, damit diese Kompensation an unterschiedliche Gegebenheiten
angepaßt werden kann.

Aufgabe der Erfindung ist es daher, eine Kompensationseinrichtung der eingangs genannten Art so auszubilden, daß
bei einfachem Aufbau eine rasche und genaue Positionierung
der Werkzeugschneide nach jedem Bearbeitungsvorgang unter
Wahrung weitgehender Eingriffsmöglichkeiten erreicht wird.

Diese Aufgabe wird erfindungsgemäß dadurch gelöst, daß die
Gewindespindel mit der Spindelmutter als spielfreie Kugelumlaufspindel ausgeführt ist, daß der Verstellmotor ein
Schrittmotor ist und die Spindelmutter über einen Schnekkentrieb antreibt, und daß der Verstellmotor zugleich den
Antrieb für die axiale Bewegung der Zugstange zum Abheben
der Schneide am Ende des Bearbeitungsvorganges bildet.

Durch die Verwendung des an sich bekannten Schrittmotors
als Verstellmotor wird ein Verstellantrieb geschaffen, der
sehr schnell und gleichwohl mit hoher Genauigkeit verstellbar ist. Die ebenfalls an sich bekannte spielfreie Kugelumlaufspindel ermöglicht es, ohne die Notwendigkeit eines hohen Antriebsmomentes die Verstellung vorzunehmen. Trotz
der Verwendung einer Kugelumlaufspindel, die keine Selbsthemmung aufweist, bleibt die Zugstange in der jeweils gewählten Stellung wie ein Anschlag sicher stehen, weil der
für den Antrieb der Spindelmutter verwendete Schneckentrieb ein selbsthemmendes Übertragungselement ist. Dadurch
verändert die Zugstange ihre axiale Stellung auch dann nicht,
wenn der Verstellmotor stromlos wird.  Die Kombination des
Schrittmotors als Verstellmotor mit einer Kugelumlaufspindel
mit vorgespannter Doppelmutter ermöglicht es, jede gewählte
Stellung mit hoher Präsision und Wiederholgenauigkeit anzufahren; der selbsthemmende Schneckentrieb ermöglicht es,
die erreichte Stellung wie beim Anfahren gegen einen Anschlag beizubehalten.

Durch Verdrehen der Schneckenwelle  bzw. des Verstellmotors
von Hand kann in einfacher Weise und mit geringem Kraftaufwand eine Verstellung auf das jeweils gewünschte Kompensationsmaß bei laufender Spindel vorgenommen werden, ohne
daß hierfür eine Blockiereinrichtung für die Zugstange gelöst werden müßte.

Weitere vorteilhafte Ausgestaltungen des Erfindungsgedankens sind Gegenstand von Unteransprüchen.

Die Erfindung wird nachfolgend an einem Ausführungsbeispiel
näher erläutert, das in der Zeichnung dargestellt ist.
In diesem Zusammenhang werden auch die Merkmale der Unteransprüche und die damit erzielbaren Vorteile erläutert.
Es zeigt:

Fig. 1 eine Feinbohrmaschine mit einer erfindungsgemäßen
       Kompensationseinrichtung, deren Steuereinrichtung
       im Blockschaltbild stark vereinfacht dargestellt ist,
Fig. 2 einen Teil-Längsschnitt durch die Antriebseinrichtung
       für die Axialbewegung der Zugstange und
Fig. 3 einen Schnitt längs der Linie III-III in Fig. 2.

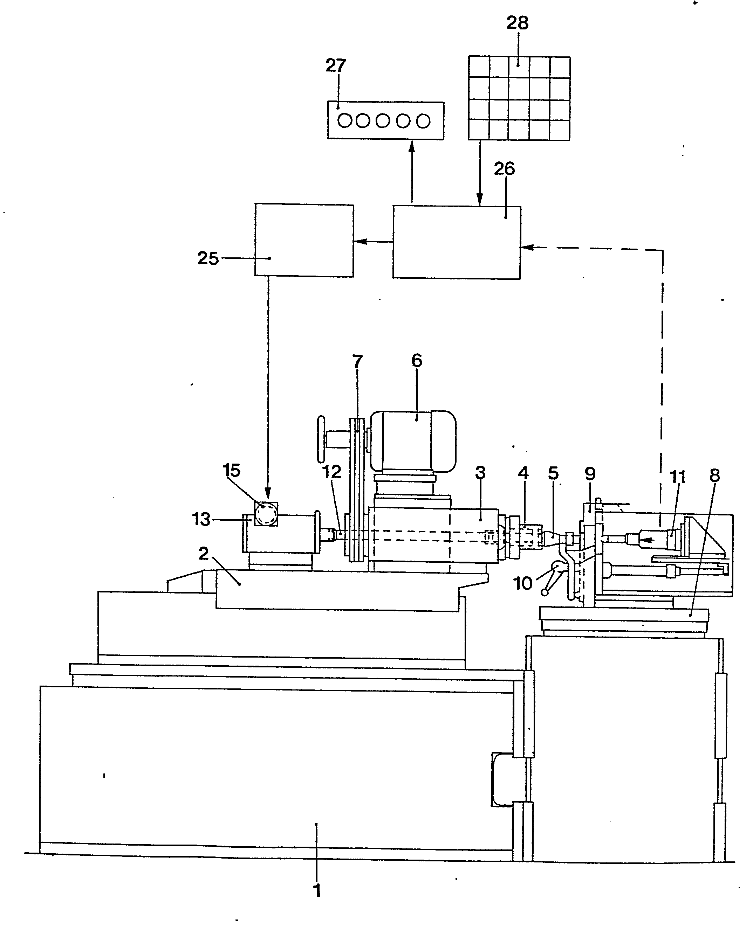

Die in Fig. 1 gezeigte Feinbohrmaschine weist ein Maschinenbett 1 auf, auf dem eine Schlitteneinheit 2 längsverschiebbar geführt ist. Die Schlitteneinheit 2 trägt einen Spindelstock 3, in dem eine Werkzeugspindel 4 gelagert ist, die an
ihrem vorderen Ende eine Bohrstange 5 trägt. Ein Spindelmotor
6 treibt über einen Riementrieb 7 die Werkzeugspindel 4.

Auf einem mit dem Maschinenbett 1 verbundenen Aufspanntisch 8
ist ein Werkstück 9 mittels einer Spannvorrichtung 10 aufgespannt. Bei dem dargestellten Ausführungsbeispiel befindet
sich auf dem Aufspanntisch 8 auch eine Meßeinrichtung 11, mit
der der gebohrte Durchmesser des Werkstücks 9 gemessen werden
kann.

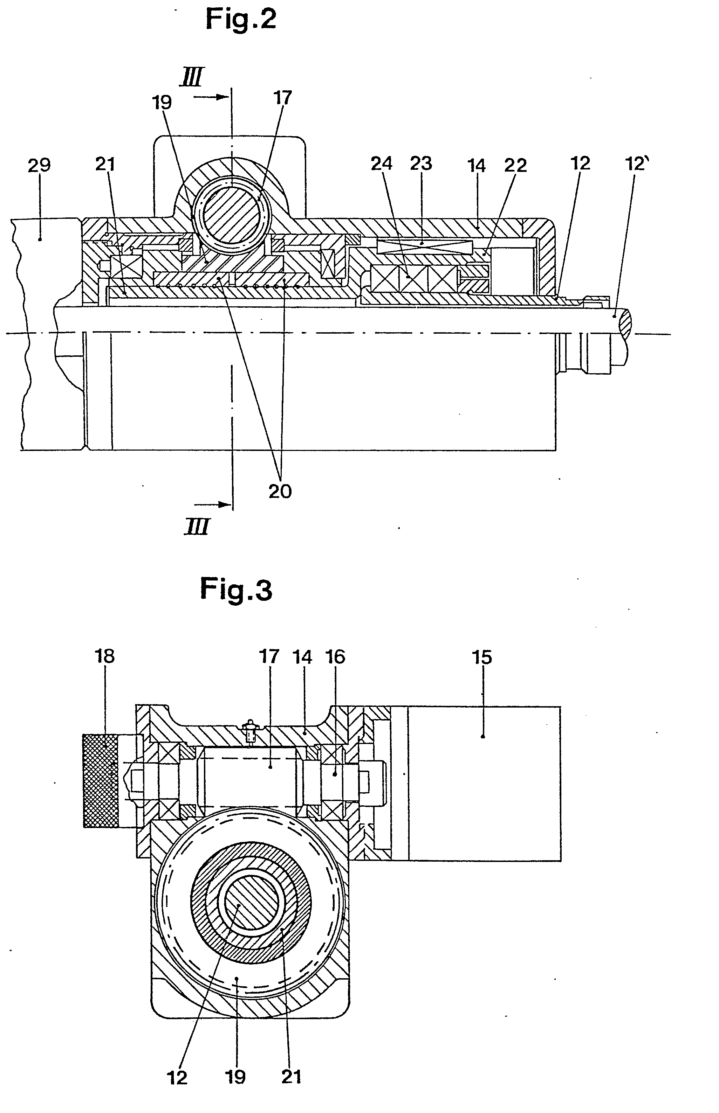

Die Bohrstange 5 ist um eine quer zu ihrer Drehachse liegende Achse schwenkbar (nicht dargestellt); um diese Schwenkbewegung mittels einer Schrägfläche oder Steuerkurve zu erreichen, muß eine in der Werkzeugspindel 4 längsverschiebbar
geführte Zugstange 12 in axialer Richtung bewegt werden. Diese Axialbewegung erfolgt mittels einer Verstelleinrichtung 13,
deren Einzelheiten in den Fig. 2 und 3 dargestellt sind.

An einem Gehäuse 14 ist als Verstellmotor ein Schrittmotor 15
angeflanscht, der eine im Gehäuse 14 gelagerte Schneckenwelle 16 mit einer Schnecke 17 antreibt. Am anderen Ende der
Schneckenwelle 16 ist ein Verstellhandrad 18 angebracht. Die
Schnecke 17 treibt ein Schneckenrad 19, das mit einer im Gehäuse 14 drehbar gelagerten, vorgespannten Doppelmutter 20
verbunden ist, die spielfrei mit einer Kugelumlaufspindel 21
in Eingriff steht. Die beiden Muttern sind axial gegeneinander verspannbar.

Die Kugelumlaufspindel 21 ist mit einer im Gehäuse 14 axial
bewegbaren Lagerglocke 22 fest verbunden, die mittels einer
Paßfeder 23 im Gehäuse 14 undrehbar geführt ist. Ein aus
mehreren Schrägkugellagern bestehendes Lager 24 verbindet die Lagerglocke 22 drehbar mit dem aus dem Spindelstock 3 herausragenden hinteren Ende der Zugstange 12.

Eine Steuereinrichtung 25 (Fig. 1) liefert nach jedem Bearbeitungsvorgang die der gewünschten Abhebebewegung der Werkzeugschneide und der jeweils erforderlichen Kompensationsbewegung entsprechende Anzahl von Schrittimpulsen an den Schrittmotor 15. Dazu ist die Steuereinrichtung 25 mit einer Programmsteuerung 26 verbunden, die wiederum mit einer Anzeigeeinrichtung 27 und mit einer Eingabetastatur 28 verbunden ist.

Je nach der gewünschten Betriebsweise kann die Programmsteuerung 26 entweder nach jedem einzelnen Bearbeitungsvorgang oder nach einer vorgegebenen Anzahl von Bearbeitungsvorgängen die der erforderlichen Kompensationsbewegung entsprechende Anzahl von Schrittimpulsen in der Steuereinrichtung 25 auslösen, denen die für die Abhebebewegung der Schneide erforderliche Anzahl von Impulsen überlagert wird. Die Programmsteuerung 26 kann festverdrahtet oder mit Mikroprozessoren ausgeführt werden. Durch ein geeignetes, aufgrund von Meßergebnissen ermitteltes Programm kann der zu erwartende Schneidenverschleiß festgelegt und abhängig davon die Kompensation durchgeführt werden. Dann ist keine Meßeinrichtung 11 erforderlich.

Wie in Fig. 1 mit gestrichelter Linie angedeutet, kann die Meßeinrichtung 11 an die Programmsteuerung 26 eine Information über den bei der Bearbeitung erzielten Istwert der Bohrungsabmessung liefern. Durch einen Soll-Istwertvergleich liefert die Programmsteuerung 26 dann die zu der entsprechenden Kompensation notwendigen Schrittimpulse an die Steuereinrichtung 25.

Die Anzeigeeinrichtung 27 ermöglicht es, der Bedienungsperson Informationen über den Arbeitsablauf zu liefern, so daß die Bedienungsperson über die Eingabetastatur 28 in den
Ablauf eingreifen kann, falls dies erforderlich ist. Die Bedienungsperson kann hierbei auch bei laufender Spindel manuell
mittels des Verstellhandrades 18 eingreifen.

Wie in Fig. 2 im Schnitt dargestellt, sind die Gewindespindel
21, die damit verbundene Lagerglocke 22 und die Zugstange 12
hohl ausgeführt und nehmen koaxial eine weitere Zugstange 12'
einer in Fig. 2 nur zum Teil dargestellten, achsgleich zu der
gezeigten Einrichtung angeordneten, im wesentlichen gleich
aufgebauten Einrichtung 29 auf, die der radialen Verstellung
einer weiteren im Werkzeugkörper 5 gelagerten Schneide dient.
Wenn auch die weitere Zugstange 12' und die damit verbundenen
Teile hohl ausgeführt sind, kann darin noch eine weitere Zugstange für eine dritte Schneide angeordnet werden. Unter Verwendung gleicher Verstelleinrichtungen, die hintereinander
achsgleich angeordnet werden, können auf diese Weise mehrere
Schneiden unabhängig voneinander positioniert werden.

PATENTANSPRÜCHE

1. Einrichtung zur radialen Verstellung einer in einem
   Werkzeugkörper angeordneten Schneide zur Kompensation
   des an der Schneide auftretenden Verschleißes mittels
   eines im Werkzeugkörper angeordneten Verstellmechanismus, der über eine axial verschiebbare Zugstange mit
   einer Gewindespindel in Eingriff steht, deren in einem
   Gehäuse gelagerte Spindelmutter über ein Drehzahlreduziergetriebe mit sich kreuzenden Achsen von einem
   Verstellmotor antreibbar ist, dadurch gekennzeichnet,
   daß die Gewindespindel (21) mit der Spindelmutter (20)
   als spielfreie Kugelumlaufspindel ausgeführt ist, daß
   der Verstellmotor (15) ein Schrittmotor ist und die
   Spindelmutter (20) über einen Schneckentrieb (17, 19)
   antreibt, und daß der Verstellmotor (15) zugleich
   den Antrieb für die axiale Bewegung der Zugstange (12)
   zum Abheben der Schneide am Ende des Bearbeitungsvorganges bildet.

2. Einrichtung nach Anspruch 1, dadurch gekennzeichnet, daß eine mit dem Schrittmotor (15) verbundene Schnekkenwelle (16) mit einem Verstellhandrad (18) verbunden ist.

3. Einrichtung nach Anspruch 1, dadurch gekennzeichnet, daß die Spindelmutter als vorgespannte Doppelmutter (20) ausgeführt ist.

4. Einrichtung nach Anspruch 1, dadurch gekennzeichnet, daß die Gewindespindel (21) mit einer im Gehäuse (14) axial bewegbaren, undrehbar geführten Lagerglocke (22) verbunden ist, die über Axiallager (24) mit der Zugstange (12) verbunden ist.

5. Einrichtung nach Anspruch 1, dadurch gekennzeichnet, daß der Schrittmotor (15) mit einer Steuereinrichtung (25) verbunden ist, die nach einem Bearbeitungsvorgang die der gewünschten Abhebebewegung und der jeweils erforderlichen Kompensationsbewegung entsprechende Anzahl von Schrittimpulsen liefert.

6. Einrichtung nach Anspruch 5, dadurch gekennzeichnet, daß die Steuereinrichtung (25) mit einer Programmsteuerung (26) in Verbindung steht, die nach jedem Bearbeitungsvorgang oder nach einer vorgegebenen Anzahl von Bearbeitungsvorgängen die erforderliche Kompensationsbewegung durch eine entsprechende Anzahl von Schrittimpulsen in der Steuereinrichtung (25) auslöst.

7. Einrichtung nach Anspruch 5, dadurch gekennzeichnet, daß eine das Maß des bearbeiteten Werkstücks (9) erfassende Meßeinrichtung (11) vorgesehen ist, die in Abhängigkeit von einer festgestellten Maßabweichung von einem Sollwert ein Signal liefert, das in der Steuereinrichtung (25) die der erforderlichen Kompensationsbewegung entsprechende Anzahl von Schrittimpulsen auslöst.

8. Einrichtung nach Anspruch 6, dadurch gekennzeichnet,
   daß die Programmsteuerung (26) mit einer Anzeigeeinrichtung (27) und mit einer Eingabetastatur (28)
   zur Eingabe von Programmparametern verbunden ist.

9. Einrichtung nach Anspruch 1, dadurch gekennzeichnet,
   daß die Gewindespindel (21) die damit verbundene Lagerglocke (22) und die Zugstange (12) hohl ausgeführt
   sind zur Aufnahme mindestens einer weiteren Zugstange einer bzw. mehrerer in gleicher Weise aufgebauter
   und gleichachsig angeordneter Einrichtungen zur
   radialen Verstellung weiterer im Werkzeugkörper angeordneter Schneiden.

**Fig.1**

**Fig.2**

**Fig.3**

Europäisches Patentamt

**EUROPÄISCHER RECHERCHENBERICHT**

Nummer der Anmeldung

EP 80 10 1564

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 327 840 (RENAULT)  * Seiten 3-9; Figuren 1,2 * | 1,4-7 | B 23 B 29/034 |
| | -- | | |
| | DE - A - 1 477 394 (HELLER)  * Seite 14; Figur 7 * | 1,4 | |
| | -- | | |
| | US - A - 3 286 556 (REYNOLDS)  * Spalte 6, Zeilen 44-55; Spalte 7, Zeilen 14-54; Figur 2 * | 1,4 | |
| | -- | | RECHERCHIERTE SACHGEBIETE (Int. Cl. 3) |
| A | GB - A - 990 967 (WARSEWA) | | B 23 B 29/00 |
| A | US - A - 3 526 159 (ROBINSON) | | |
| A | US - A - 3 237 486 (GILBERT) | | |
| A | US - A - 3 073 185 (HOFFMANN) | | |
| A | US - A - 2 826 943 (TOWNSEND) | | |
| | ----- | | |

Der vorliegende Recherchenbericht wurde für alle Patentansprüche erstellt.

| Recherchenort | Abschlußdatum der Recherche | Prüfer |
|---|---|---|
| Den Haag | 18-06-1980 | BOGAERT |

EPA form 1503.1 06.78